# EUROPÄISCHE PATENTANMELDUNG

(11) **EP 3 208 652 A1**
(43) Veröffentlichungstag der Anmeldung: **23.08.2017**
(21) Anmeldenummer: 16206416.6
(22) Anmeldetag: 22.12.2016
(51) Int. Cl.: G02C 7/02

(54) **OPTISCHER LINSENROHLING, EIN ROHLINGSORTIMENT UND EIN VERFAHREN ZUR HERSTELLUNG EINES BRILLENGLASES**

(30) Priorität: 17.02.2016 DE 102016102741
(71) Anmelder: Optotech Optikmaschinen GmbH, 35435 Wettenberg/Launsbach (DE)
(72) Erfinder: MANDLER, Roland, 35452 Heuchelheim (DE)
(74) Vertreter: Patentanwälte Olbricht Buchhold Keulertz

(57) **Zusammenfassung**

Die Erfindung betrifft einen optischen Linsenrohling (1) mit einer ersten und einer zweiten Linsenfläche (2, 3), die sich gegenüberstehend angeordnet und an einem Linsenumfang (4) begrenzt sind, wobei die erste Linsenfläche (2) eine Oberflächengeometrie aufweist, die einem Teilausschnitt (T1) aus einer ersten Melonenform (10) entspricht. Außerdem betrifft die Erfindung ein Rohlingsortiment bestehend aus solchen Linsenrohlingen (1) mit unterschiedlich stark gekrümmten ersten Linsenflächen, wobei die unterschiedlich starken Krümmungen auf unterschiedlichen Melonenformen beruhen. Schließlich betrifft die Erfindung auch noch ein Verfahren zur Herstellung eines Brillenglases aus einem solchen optischen Linsenrohling.

## Beschreibung

Die Erfindung betrifft einen optischen Linsenrohling gemäß dem Oberbegriff von Anspruch 1, ein Rohlingsortiment nach Anspruch 14 und ein Verfahren zur Herstellung eines Brillenglases aus einem optischen Linsenrohling nach Anspruch 15.

Optische Linsenrohlinge zur Herstellung von Brillengläsern werden oftmals spanlos aus Kunststoff oder Silikatglas hergestellt und haben vorzugsweise einen kreisförmigen Linsenumfang. Linsenrohlinge aus Kunststoff entstehen in der Regel durch Gießen oder Spritzgießen und Linsenrohlinge aus Silikatglas durch Absenken von erwärmten Glasronden in Formen. Bereits die Linsenrohlinge weisen oftmals eine erste Linsenfläche (meist die Vorderseite) mit optisch wirksamer Oberfläche auf, das heißt die erste Linsenfläche muss nicht nachgearbeitet werden. Eine gegenüberliegende zweite Linsenfläche wird später mittels CNC-Maschine nachbearbeitet (meist die Rückseite).

Die Nachbearbeitung der zweiten Linsenfläche basiert meist auf einem Rezept, das den individuellen Sehfehler eines Rezepteigners beschreibt. Zur Nachbearbeitung der zweiten Linsenfläche wird auf Basis des Rezepts und der Geometrie der ersten Linsenfläche eine Rezeptfläche berechnet. Diese Rezeptfläche wird aus der zweiten Linsenfläche herausgearbeitet und bildet dann gemeinsam mit der ersten Linsenfläche eine Rezeptlinse, die den Sehfehler des Rezepteigners korrigiert. Hierzu wird zumeist erst eine mechanische Bearbeitung durch beispielweise Drehen, Fräsen und Schleifen durchgeführt. An die mechanische Bearbeitung schließt sich dann ein Poliervorgang an. Hierbei wird die Rautiefe der Oberflächen soweit verringert, dass Licht nicht mehr unzulässig zerstreut wird und die Linse somit durchsichtig ist. Durch Anpassen der Umfangsgeometrie des Linsenrohlings an ein Brillengestell, oftmals als Einschleifen bezeichnet, entsteht schließlich ein Brillenglas.

Insbesondere zur Korrektur von Alterssichtigkeit kann es notwendig sein, dass das Brillenglas mehrere Brennpunkte haben muss. Je nach Entfernung des Objektes wölbt sich die Augenlinse unterschiedlich stark. Bei der Alterssichtigkeit ist diese Elastizität eingeschränkt - die Augenlinse verhärtet und verdickt sich. Dies führt dazu, dass der Sehfehler des Auges bei Objekten in kurzer Distanz zum Auge (Nahsichtbereich) ein anderer ist als der bei weit entfernten Objekten (Weitsichtbereich). Um Objekte in allen Distanzen zum Auge scharf sehen zu können, muss der Brennpunkt des Auges je nach Distanz des Objekts zum Auge durch einen bestimmten Brennpunkt einer Linse korrigiert werden. Durch Auslegung der Rezeptfläche ist es möglich eine Linse derart zu gestalten, dass sie mehrere Brennpunkte in unterschiedlichen Zonen des Brillenglases hat. Durch eine Veränderung der Blickrichtung wird die Zone innerhalb des Brillenglases gewechselt.

Hat ein Brillenglas zwei unterschiedliche Brennpunkte, in der Regel einen für den Weitsichtbereich und einen für den Nahsichtbereich im unteren Bereich des Brillenglases, so wird die Linse als bifokale Linse bezeichnet. Erkennbar sind derartige Gläser zumeist durch einen sichtbaren Übergang zwischen den beiden Bereichen. Sofern der Brennpunkt bei einer Blickwinkeländerung, insbesondere von oben nach unten, mehrfach ein anderer ist, wird von einer multifokalen Linse gesprochen. Dabei kann der Brennpunkt auch kontinuierlich ein anderer sein.

Die meisten Linsenrohlinge zur Herstellung von Brillengläsern haben sowohl eine sphärische Vorderseite, als auch eine sphärische Rückseite. Unter sphärisch ist zu verstehen, dass die Oberfläche ein Kugelausschnitt ist, bzw. dass alle Punkte auf der Oberfläche in einem Abstand Radius von einem Kugelmittelpunkt entfernt liegen.

Außerdem ist aus EP 1 990 676 A2 ein Linsenrohling bekannt, die asymmetrisch ist und bei der nur die Rückseite nachbearbeitet werden soll. Die Vorderseite der Rohlinse wird von zwei Teilflächen gebildet. Während es sich bei der Hauptfläche um eine Sphäre handelt, ist dezentral in der Hauptfläche eine torische Fläche angeordnet. Diese torische Fläche weist eine geringere Krümmung als die Hauptfläche auf und soll später im unteren Bereich des Brillenglases angeordnet sein, insbesondere in dem Bereich des Brillenglases, der den Sehfehler im Nahsichtbereich korrigieren soll. Torische Flächen bzw. torische Gläser dienen nicht nur zur Korrektur einer Kurz- oder Weitsichtigkeit, sondern auch zum Ausgleich einer Hornhautverkrümmung (Astigmatismus). Ihr Aufbau ist komplizierter. Auf einem Rezept sind torische Gläser daran erkennbar, dass die Stärke in drei Teilen notiert ist. Die einzelnen Teile werden als Sphäre (sph), Cylinder (cyl) und Achse bezeichnet.

Nachteilig bei EP 1 990 676 A2 ist, dass die prismatische Wirkung in horizontaler Richtung nicht berücksichtigt wird. Die sich hieraus ergebenden Unschärfen in die Blickrichtungen links und rechts sind nicht nur für den Brillenträger störend, sondern z. B. im Falle eines Fahrzeugführers, der einen Schulterblick mit einer derartigen Brille durchführt, auch gefährlich für ihn selbst und Dritte. Häufig leiden Brillenträger wegen dieser Unschärfen auch an Übelkeit, Kopfschmerzen und Schwindelgefühlen. Weiterhin ist die Ästhetik des Brillenglases beeinträchtigt, da der Übergang von der sphärischen auf die torische Fläche auf der Vorderseite der Linse insbesondere durch Lichtreflexe wahrnehmbar ist.

Aufgabe der Erfindung ist es, die Wirtschaftlichkeit und die Qualität bei der Fertigung von Brillengläsern zu steigern. Zu berücksichtigen ist dabei insbesondere eine Verringerung der prismatischen Wirkung in allen Blickrichtungen. Dabei soll beachtet werden, dass modische Anforderungen an die Vorderseite bestehen. Idealerweise sollte die Anzahl an unterschiedlichen Linsenrohlingen für ein Rohlingsortiment begrenzt sein, um die Vorhaltekosten gering zu halten. Die weiteren Nachteile des Stands der Technik sollen behoben werden.

Hauptmerkmale der Erfindung sind im kennzeichnenden Teil von Anspruch 1, in Anspruch 14 und in Anspruch 15 angegeben. Ausgestaltungen sind Gegenstand der Ansprüche 2 bis 13 und 16 bis 17.

Die Erfindung betrifft einen optischen Linsenrohling, insbesondere zur Herstellung von Brillengläsern, mit einer ersten und einer zweiten Linsenfläche, die sich gegenüberstehend angeordnet und an einem Linsenumfang begrenzt sind, wobei die erste Linsenfläche eine Oberflächengeometrie aufweist, die einem Teilausschnitt aus einer ersten Melonenform entspricht.

Die so gestaltete erste Linsenfläche ist von besonderem Vorteil, denn die Melonenform führt dazu, dass Brillengläser aus dem Linsenrohling gewonnen werden können, bei denen sich die Krümmung in wenigstens einer Richtung kontinuierlich ändert. Entlang der vertikalen Blickachse, oftmals auch als Progressionskanal bezeichnet, ist eine Krümmungszunahme der ersten Linsenfläche von oben nach unten wünschenswert. Gleichzeitig ist eine Krümmungszunahme im horizontalen Schwenkbereich, insbesondere von nasal nach temporal, günstig, der am unteren Ende des Brillenglases größer ist als am oberen. Beide Krümmungsänderungen korrespondiert mit den Bewegungen der Augen. Insofern kann von einem bionischen Ansatz geredet werden, der hinter der Auswahl der Melonenform steckt. Die Melonenform schafft es dabei, auch in allen Flächenbereichen außerhalb der Blickachsen kontinuierliche Krümmungsänderungen bereitzustellen. Ein so ausgestaltetes Brillenglas bietet einen hohen Sehkomfort mit hoher Sehschärfe.

In einer speziellen Ausgestaltung des Linsenrohlings ist die erste Melonenform gestreckt. Damit liegt entlang der Streckung eine sich kontinuierlich ändernde Krümmung vor. Diese liegt vorzugsweise parallel zur vertikalen Blickachse des späteren Brillenglases. Die Krümmung in der vertikalen Blickachse ist somit geringer als in der horizontalen Blickachse, was wiederum den Bewegungen des Auges nachempfunden ist.

Gemäß einer besonderen Variante des Linsenrohlings ist die erste Melonenform ein Ellipsoid. Ein solches ist mathematisch bestimmt, sodass die Berechnung der optischen Eigenschaften der Linse einfach ist.

Bei einer speziellen Ausführung ist das Ellipsoid ein Rotationsellipsoid, das insbesondere von drei Ellipsoidradien aufgespannt ist, wobei der erste und zweite Ellipsoidradius gleich groß sind und die Größe des dritten Ellipsoidradius von der Größe des ersten und zweiten Ellipsoidradius abweicht. Damit wird erreicht, dass auf der ersten Linsenfläche in einer Richtung eine kontinuierliche Krümmungsänderung, nämlich in der Lage des dritten Ellipsoidradius. Gleichzeitig sind in den Ebenen parallel zur Ebene, die von dem ersten und zweiten Ellipsoidradius aufgespannt wird Kreisbahnen mit konstantem Radius auf der Linsenfläche zu finden. Diese konstanten Kreisbahnen liegen bevorzugt jeweils horizontal im späteren Brillenglas. Dabei nimmt der Radius der Kreisbahnen bevorzugt von oben nach unten ab.

Gemäß einer anderen speziellen Ausführungsform des Linsenrohlings ist das Ellipsoid ein triaxiales Ellipsoid, das insbesondere von drei Ellipsoidradien aufgespannt ist, wobei der erste, zweite und dritte Ellipsoidradius jeweils unterschiedlich groß sind. Damit wird erreicht, dass ein Brillenglas in vertikaler und horizontaler Blickrichtungen kontinuierliche Krümmungsänderungen vorliegen können. Bevorzugt ist die Linsenfläche dabei spiegelsymmetrisch ausgeführt, um gleichartige linke und rechte Brillengläser aus einem einzigen Linsenrohling herstellen zu können.

Weiterhin ist bei einem besonders Design des Linsenrohlings vorgesehen, dass die zwei kleineren Ellipsoidradien aus der Gruppe des ersten, zweiten und dritten Ellipsoidradius (am Rand oder außerhalb der ersten Linsenfläche liegen. Hierdurch wird eine kontinuierliche Zunahme des Krümmungsradius von einer Seite des Entnahmebereichs für das Brillenglas zur gegenüberliegenden Seite des Entnahmebereichs erreicht. Die kontinuierliche Krümmungszunahme ist später im Brillenglas bevorzugt die vertikale Blickachse.

In einer optionalen Ausführungsform des Linsenrohlings ist der größere Ellipsoidradius aus der Gruppe des ersten, zweiten und dritten Ellipsoidradius wenigstens so groß wie der Durchmesser des Linsenrohlings. Damit kann die Linsenfläche an einer Stelle aus der Melonenform gewonnen werden, die abseits des Äquators liegt, der von den beiden kleineren Ellipsoidradien aufgespannt wird.

Nach einer speziellen Ausbildung des Linsenrohlings weist das Größenverhältnis zwischen dem kleinsten und dem größten Ellipsoidradius aus der Gruppe des ersten, zweiten und dritten Ellipsoidradius einen Faktor zwischen 1,15 und 4,00, vorzugsweise zwischen 1,20 und 3,50, und besonders bevorzugt zwischen 1,25 und 3,00 auf. Innerhalb dieser Größenverhältnisse lässt sich ein Rohlingsortiment zusammenstellen, mit dem Brillengläser zur Korrektur der meisten Sehfehler herstellbar sind.

Bei einer Ausgestaltungsoption ist die erste Linsenfläche konvex. Eine solche konvexe erste Linsenfläche kann die Vorderseite eines Brillenglases ausbilden. Damit ergibt sich eine harmonische vordere Oberfläche ohne zum Beispiel Lichtkanten. Gleichzeitig wird die Rückseite auch nach einer Bearbeitung weitestgehend senkrecht zur Blickrichtung ausgerichtet sein, denn die Vorderseite ist an die Augenbewegung angepasst und die Rückseitengeometrie folgt der Vorderseite zumindest relativ stark.

Zur Herstellung von Brillengläsern bietet es sich an, dass die zweite Linsenfläche konkav ist.

Des Weiteren ist es für eine rotierende Bearbeitung des Linsenrohlings von Vorteil, wenn der Linsenumfang eine kreisförmige Grundform hat.

Bevorzugt weist die zweite Linsenfläche eine Oberflächengeometrie auf, die einem Teilausschnitt aus einer zweiten Melonenform entspricht. Damit ist auch auf der zweiten Linsenfläche Krümmung ausgebildet, die sich in wenigstens einer Richtung kontinuierlich ändert.

Dabei weicht die Größe der zweiten Melonenform vorzugsweise um einen Multiplikationsfaktor von der Größe der ersten Melonenform ab, wobei die erste Melonenform und die zweite Melonenform die gleiche Form haben. Durch die Ähnlichkeiten der ersten und zweiten Melonenform sind die erste und die zweite Linsenfläche aufeinander abgestimmt.

In einer speziellen Variante ist vorgesehen, dass die erste Melonenform und die zweite Melonenform die gleiche Ausrichtung im Raum und den gleichen Mittelpunkt haben. Damit wird eine homogene Dicke des Linsenrohlings erzielt.

Des Weiteren ist zu bevorzugen, dass die zweite Melonenform gestreckt ist. Insbesondere ist die zweite Melonenform vorzugsweise ein Ellipsoid. Das Ellipsoid der zweiten Melonenform kann ein Rotationsellipsoid sein, das insbesondere von drei Ellipsoidradien aufgespannt ist, wobei der erste und zweite Ellipsoidradius gleich groß sind und die Größe des dritten Ellipsoidradius von der Größe des ersten und zweiten Ellipsoidradius abweicht. Alternativ dazu kann das Ellipsoid der zweiten Melonenform ein triaxiales Ellipsoid ist, das insbesondere von drei Ellipsoidradien aufgespannt ist, wobei der erste, zweite und dritte Ellipsoidradius jeweils unterschiedlich groß sind. Zur Gewinnung eines Linsenrohlings sollte der größere Ellipsoidradius aus der Gruppe des ersten, zweiten und dritten Ellipsoidradius wenigstens so groß wie der Durchmesser des Linsenrohlings sein. Hinsichtlich der Größenverhältnisse sind insbesondere Ausführungen geeignet, nach denen das Größenverhältnis zwischen dem kleinsten und dem größten Ellipsoidradius aus der Gruppe des ersten, zweiten und dritten Ellipsoidradius einen Faktor zwischen 1,15 und 4,00, vorzugsweise zwischen 1,20 und 3,50, und besonders bevorzugt zwischen 1,25 und 3,00 aufweist.

Die Erfindung betrifft außerdem ein Rohlingsortiment bestehend aus 2 bis 20, vorzugsweise 3 bis 12 und besonders bevorzugt 4 bis 9 Linsenrohlingen wie sie vorstehend und nachstehend beschrieben sind und mit unterschiedlich stark gekrümmten ersten Linsenflächen, wobei die unterschiedlich starken Krümmungen auf unterschiedlichen Melonenformen beruhen.

Damit ist das Rohlingsortiment geeignet dazu, für nahezu alle Sehfehler einen Linsenrohling vorhalten zu können, aus dem ein Brillenglas zur Behebung des Sehfehlers herstellbar ist. Die Nachbearbeitung erfolgt heute mit modernen CNC-Maschinen, so dass auch komplizierte Oberflächengestaltungen realisierbar sind. Die Nachbearbeitung eines Linsenrohlings ist jedoch dahingehend begrenzt, dass sowohl die Stabilität der Linse gewahrt bleiben muss, als auch die Krümmungsradien und die Materialstärke des Linsenrohlings den Änderungen Grenzen auferlegen. Deshalb ist zumindest eine bestimmte Anzahl verschiedenartiger Linsenrohlingen erforderlich, um Linsen für eine möglichst große Sehfehlerspanne fertigen zu können.

Darüber hinaus betrifft die Erfindung ein Verfahren zur Herstellung eines Brillenglases aus einem optischen Linsenrohling wie er vorstehend und nachstehend beschrieben sind umfassend den Schritt einer formgebenden Bearbeitung der ersten und/oder zweiten Linsenfläche, sowie den Schritt eines Heraustrennens eines Ausschnitts aus dem formgebend bearbeiteten Linsenrohling, der einen Teilausschnitt der ersten und zweiten Linsenfläche aufweist, entlang einer Fassungslinie.

Durch das erfindungsgemäße Verfahren entsteht aus den erfindungsgemäßen Linsenrohlingen mit wenigen Arbeitsschritten ein einseitig bearbeitetes Brillenglas mit hoher Sichtqualität.

Gemäß einer näheren Verfahrensausgestaltung weist der Teilausschnitt eine vertikale Sichtachse und eine horizontale Sichtachse auf, die sich in einer Nullblickachse schneiden, wobei die erste und/oder zweite Linsenfläche entlang der vertikalen Sichtachse eine geringere Krümmung aufweist als entlang der horizontalen Sichtachse.

Damit entsteht ein Brillenglas, dessen erste Linsenfläche der Augenbewegung und dem Sichtfeld eines Menschen angepasst ist, wobei insbesondere die Blickachse die erste Linsenfläche möglichst Lotrecht schneidet.

Bei einer speziellen Verfahrensausgestaltung weist der Teilausschnitt eine vertikale Sichtachse auf, die eine Nullblickachse schneidet, wobei die Krümmung der ersten und/oder zweiten Linsenfläche entlang der vertikalen Sichtachse von einer Glasoberkante in Richtung einer Glasunterkante zunimmt. Damit wird dem Umstand Rechnung getragen, dass ein Brillenträger den Blick kaum nach oben, jedoch sehr viel stärker nach unten richten kann. Die Krümmung entlang der vertikalen Sichtachse folgt damit der Bewegung des Auges.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung, wie eine erste Linsenfläche eines optischen Linsenrohlings in Beziehung zu einer Melonenform steht;
- Fig. 2: einen Querschnitt durch einen optischen Linsenrohling; und
- Fig. 3: eine schematische Darstellung, wie eine erste Linsenfläche eines optischen Linsenrohlings in Beziehung zu einem triaxialen Ellipsoid steht.

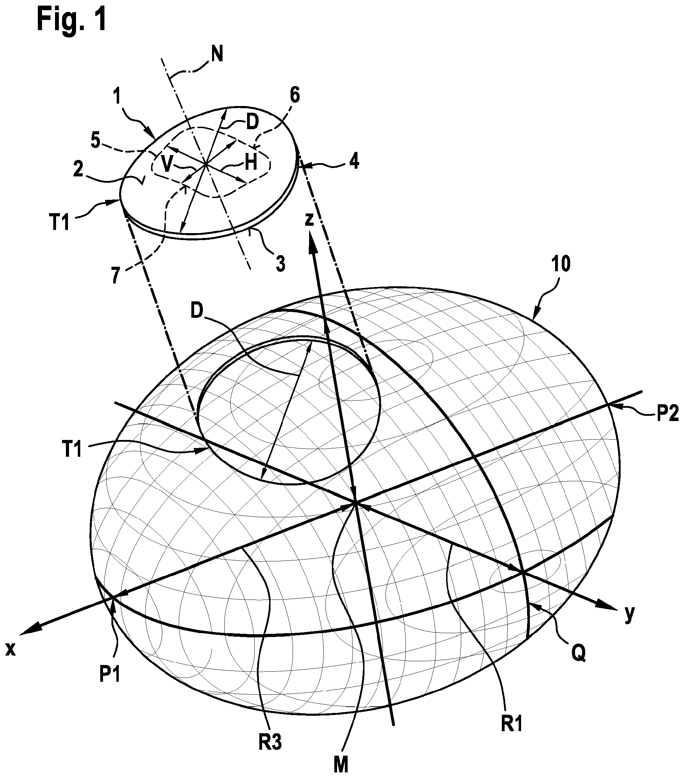

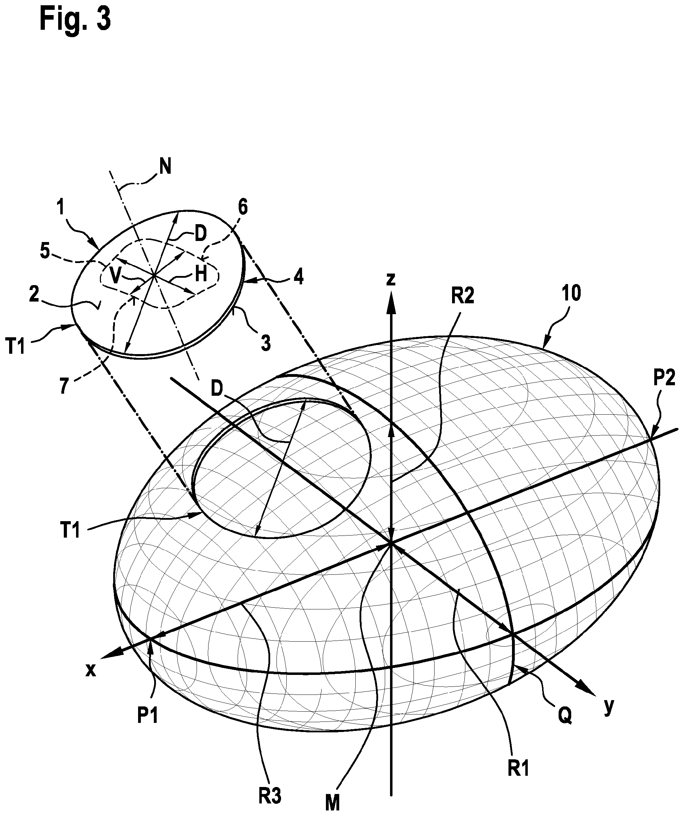

In den **Fig.1** **und** **3** erkennt man in einer schematischen Darstellung, wie eine erste Linsenfläche 2 eines optischen Linsenrohlings1 in Beziehung zu einer ersten Melonenform 10 steht. Der Linsenrohling 1 weist eine erste und eine zweite Linsenfläche 2, 3 auf, die sich gegenüberstehend angeordnet und an einem Linsenumfang 4 begrenzt sind. Der Linsenumfang 4 und damit auch der Linsenrohling 1 haben eine kreisförmige Grundform. Dabei ist die erste Linsenfläche 2 konvex und die zweite Linsenfläche 3 konkav.

Im Besonderen weist die erste Linsenfläche 2 eine Oberflächengeometrie auf, die einem Teilausschnitt T1 aus der ersten Melonenform 10 entspricht. Die Position des Teilausschnitts T1 ist auf der äußeren Hülle der ersten Melonenform 10 angezeichnet. Man erkennt, dass die erste Melonenform 10 gestreckt ist, insbesondere in Richtung der x-Koordinatenachse.

Bei der ersten Melonenform 10 handelt es sich um ein Ellipsoid. Vorliegend ist dieses Ellipsoid gemäß Fig. 1 ein Rotationsellipsoid, das insbesondere von drei Ellipsoidradien R1, R2, R3 aufgespannt ist, wobei der erste und zweite Ellipsoidradius R1, R2 gleich groß sind und die Größe des dritten Ellipsoidradius R3 von der Größe des ersten und zweiten Ellipsoidradius R1, R2 abweicht. Hier ist der dritte Ellipsoidradius R3 in Richtung der x-Koordinatenachse größer als die gleichgroßen ersten und zweiten Ellipsoidradien R1, R2, die in Richtung der y- und z-Koordinatenachsen weisen. Das heißt auch, dass das Ellipsoid und die erste Melonenform 10 keine Sphären bzw. Kugeln sind.

Alternativ zur gezeigten Ausführungsform in Fig. 1 kann das Ellipsoid auch als triaxiales Ellipsoid gemäß Fig. 3 ausgeführt sein. Auch ein solches wird von drei Ellipsoidradien R1, R2, R3 aufgespannt, wobei der erste, zweite und dritte Ellipsoidradius R1, R2, R3 jedoch jeweils unterschiedlich groß sind. Der erste Ellipsoidradius R1 in der y-Koordinatenachse ist größer sein als der zweite Ellipsoidradius R2 in der z-Koordinatenachse. Sofern die erste Melonenform 10 wie vorliegend gestreckt und das Ellipsoid triaxial ist, versteht sich die Streckung in der Richtung des größten Ellipsoidradius. Dies ist in Fig. 3 der dritte Ellipsoidradius R3.

Unabhängig davon, ob das Ellipsoid ein Rotationsellipsoid oder ein triaxiales Ellipsoid ist, wird in den Fig. 1 und 3 von dem ersten und zweiten Ellipsoidradius R1, R2 gewissermaßen der Äquator Q aufgespannt. Der Schnittpunkt des Ellipsoids mit der x-Koordinatenachse bzw. die zwei Punkte des Ellipsoids mit dem größten Abstand vom Mittelpunkt M des Ellipsoids bilden die zwei Pole P1, P2 des Ellipsoids aus.

Wie man anhand der Position des Teilausschnitts T1 erkennen kann, liegen die zwei kleineren Ellipsoidradien R1, R2 aus der Gruppe des ersten, zweiten und dritten Ellipsoidradius R1, R2, R3 bzw. der Äquator Q außerhalb der ersten Linsenfläche 2. Wie man auch sehen kann, ist der größere bzw. der größte Ellipsoidradius R3 aus der Gruppe des ersten, zweiten und dritten Ellipsoidradius R1, R2, R3 wenigstens so groß wie der Durchmesser D des Linsenrohlings 1. Bevorzugt ergibt sich aus dem Größenverhältnis zwischen dem kleinsten und dem größten Ellipsoidradius aus der Gruppe des ersten, zweiten und dritten Ellipsoidradius R1, R2, R3 ein Faktor zwischen 1,15 und 4,00, weiter bevorzugt zwischen 1,20 und 3,50, und besonders bevorzugt zwischen 1,25 und 3,00.

Die konkave zweite Linsenfläche 3 weist eine Oberflächengeometrie auf, die einem Teilausschnitt aus einer zweiten Melonenform entspricht. Bevorzugt weicht die Größe der zweiten Melonenform um einen Multiplikationsfaktor von der Größe der ersten Melonenform T1 ab, wobei die erste Melonenform T1 und die zweite Melonenform die gleiche Form haben. Optional kann dabei vorgesehen sein, dass die erste Melonenform T1 und die zweite Melonenform die gleiche Ausrichtung im Raum hinsichtlich der x-, y- und z-Koordinatenachse und den gleichen Mittelpunkt haben. Auch die zweite Melonenform ist dann ein gestrecktes Ellipsoid. Dieses ist entweder als Rotationsellipsoid ausgeführt oder alternativ ein triaxiales Ellipsoid. Wie man anhand des eingezeichneten Teilausschnitts T1 in den Fig. 1 und 3 erkennt, entsteht hierdurch eine Ellipsoidschale, aus welcher der Linsenrohling 1 gewonnen wird.

Mit einem Linsenrohling wie er von Fig. 1 und 3 gezeigt ist, lassen sich hochwertige Brillengläser herstellen, indem zunächst eine formgebende Bearbeitung der zweiten Linsenfläche 3, oder alternativ der ersten Linsenfläche 2, oder alternativ von der ersten und zweiten Linsenfläche 2, 3 durchgeführt wird. Die notwendige Bearbeitung richtet sich nach dem Sehfehler des späteren Trägers des Brillenglases. Hierzu wird meist ein individuelles Rezept für die Korrekturen des Sehfehlers erstellt. Basierend auf dem Rezept wird die gewünschte Oberflächengeometrie des Brillenglases berechnet. Nach der Herstellung der Oberflächengeometrie wird ein Ausschnitt aus dem formgebend bearbeiteten Linsenrohling 1 herausgelöst, der jeweils einen Teilausschnitt der ersten und der zweiten Linsenfläche 2, 3 aufweist. Dabei wird die Umgangsgeometrie des Linsenrohlings 1 soweit bearbeitet, bis eine Fassungslinie 5 erreicht wird. Es ergibt sich dann ein Brillenglas das eine vertikale Sichtachse V und eine horizontale Sichtachse H aufweist, die sich in einer Nullblickachse N (Geradeausblick des Brillenglasträgers) schneiden. Dabei ist die vertikale Sichtachse V vorzugsweise längs und besonders bevorzugt parallel zu der Ebene ausgerichtet, die von den x- und z-Koordinatenachsen bzw. dem zweiten und dritten Ellipsoidradius R2, R3 aufgespannt wird. Die horizontale Sichtachse H ist vorzugsweise längs und besonders bevorzugt parallel zu der Ebene ausgerichtet, die von den y- und z-Koordinatenachsen bzw. dem ersten und zweiten Ellipsoidradius R1, R2 aufgespannt wird.

Außerdem sollte die horizontale Sichtachse H beabstandet von der Ebene ausgerichtet sein, die von den y- und z-Koordinatenachsen aufgespannt wird. Die vertikale Sichtachse V liegt vorzugsweise näher an der Ebene, die von den x- und z-Koordinatenachsen aufgespannt wird, als die horizontale Sichtachse H an der Ebene, die von den y- und z-Koordinatenachse aufgespannt wird.

Bei vorliegender Ausgestaltung nimmt die Krümmung der ersten Linsenfläche 2 entlang der vertikalen Sichtachse V aus Richtung einer Glasoberkante 6 der Fassungslinie 5 in Richtung einer Glasunterkante 7 der Fassungslinie 5 kontinuierlich zu. Entlang der horizontalen Sichtachse H nimmt die Krümmung von innen nach außen jeweils kontinuierlich zu. Die Krümmung in der Horizontalen wird außerdem von der Glasoberkante 6 in Richtung der Glasunterkante 7 immer größer.

Der Teilausschnitt T1 ist außerdem so gewählt, dass alle Krümmungen entlang der vertikalen Sichtachse V kleiner sind als diejenigen entlang der horizontalen Sichtachse H.

Durch eine Staffelung der Oberflächenkrümmungen bzw. der zugrunde liegenden ersten und zweiten Melonenformen 10 lässt sich ein Rohlingsortiment mit mehreren unterschiedlich stark gekrümmten ersten und zweiten Linsenflächen 2, 3 zusammenstellen. Je nach zu korrigierendem Sehfehler und ggf. auch der gewünschten Brillenfassung kann dann ein geeigneter Linsenrohling 1 aus dem Rohlingsortiment ausgewählt werden.

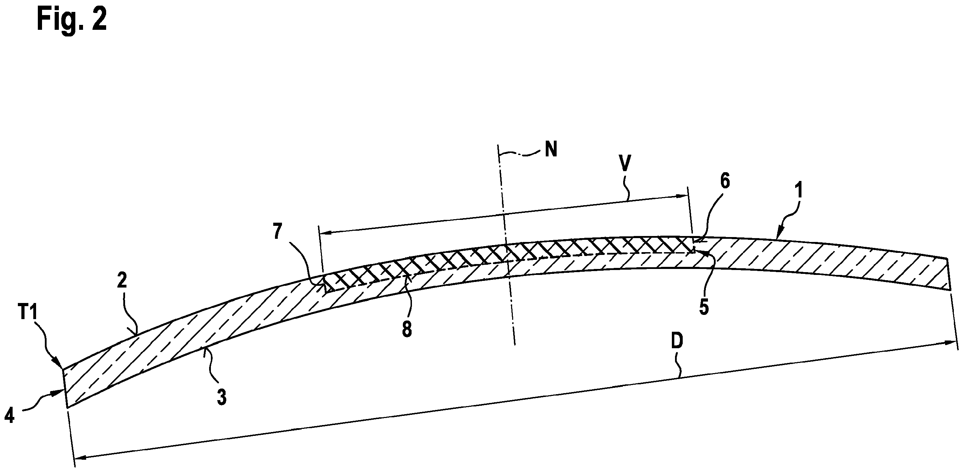

**Fig. 2** zeigt einen Querschnitt durch einen optischen Linsenrohling 1, wie er vorstehend beschrieben wurde, insbesondere entlang der vertikalen Sichtachse V. Auch hier sieht man, wie sich die erste und zweite Linsenfläche 2, 3 gegenüberstehen und an dem Linsenumfang 4 begrenzt sind. Dabei beruht die erste Linsenfläche 2 auf einem kreisrunden Teilausschnitt T1 wie er auf der Hülle der ersten Melonenform 10 in Fig. 1 angedeutet ist. Auch die Geometrie der zweiten Linsenfläche 3 entspricht einem kreisrunden Teilausschnitt aus der Hülle einer Melonenform. Damit ist der optische Linsenrohling 1 als runde Scheibe mit einem Durchmesser D ausgebildet.

Zu erkennen ist in Fig. 2 außerdem das herzustellende Brillenglas, das sich aus einer Bearbeitung der zweiten Linsenfläche 3 hin zu einer Rezeptfläche 8 und eine Anpassung des Linsenumfangs 4 an eine Fassungslinie 5 ergibt. Im Querschnitt zu sehen sind hierbei eine Glasoberkante 6 und eine Glasunterkante 7 der Fassungslinie 5. Außerdem ist gezeigt wo die Nullblickachse N liegt, entlang welcher der spätere Brillenträger bei einem Geradeausblick schaut.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Linsenrohling | N | Nullblickachse |
| 2 | erste Linsenfläche | P1 | erster Pol |
| 3 | zweite Linsenfläche | P2 | zweiter Pol |
| 4 | Linsenumfang | Q | Äquator |
| 5 | Fassungslinie | R1 | erster Ellipsoidradius |
| 6 | Glasoberkante | R2 | zweiter Ellipsoidradius |
| 7 | Glasunterkante | R3 | dritter Ellipsoidradius |
| 8 | Rezeptfläche | T1 | Teilausschnitt |
| | | V | vertikale Sichtachse |
| 10 | erste Melonenform | x | x-Koordinatenachse |
| | | y | y-Koordinatenachse |
| D | Durchmesser | z | z-Koordinatenachse |
| H | horizontalen Sichtachse | | |
| M | Mittelpunkt | | |

## Patentansprüche

1. **Optischer Linsenrohling (1)** mit einer ersten und einer zweiten Linsenfläche (2, 3), die sich gegenüberstehend angeordnet und an einem Linsenumfang (4) begrenzt sind, **dadurch gekennzeichnet, dass** die erste Linsenfläche (2) eine Oberflächengeometrie aufweist, die einem Teilausschnitt (T1) aus einer ersten Melonenform (10) entspricht.

2. Linsenrohling (1) nach Anspruch 1, **dadurch gekennzeichnet, dass** die erste Melonenform (10) gestreckt ist.

3. Linsenrohling (1) nach einem der Ansprüche 1 oder 2, **dadurch gekennzeichnet, dass** die erste Melonenform (10) ein Ellipsoid ist.

4. Linsenrohling (1) nach Anspruch 3, **dadurch gekennzeichnet, dass** das Ellipsoid ein Rotationsellipsoid ist, das insbesondere von drei Ellipsoidradien (R1, R2, R3) aufgespannt ist, wobei der erste und zweite Ellipsoidradius (R1, R2) gleich groß sind und die Größe des dritten Ellipsoidradius (R3) von der Größe des ersten und zweiten Ellipsoidradius (R1, R2) abweicht.

5. Linsenrohling (1) nach Anspruch 3, **dadurch gekennzeichnet, dass** das Ellipsoid ein triaxiales Ellipsoid ist, das insbesondere von drei Ellipsoidradien (R1, R2, R3) aufgespannt ist, wobei der erste, zweite und dritte Ellipsoidradius (R1, R2, R3) jeweils unterschiedlich groß sind.

6. Linsenrohling (1) nach einem der Ansprüche 4 oder 5, **dadurch gekennzeichnet, dass** die zwei kleineren Ellipsoidradien (R1, R2) aus der Gruppe des ersten, zweiten und dritten Ellipsoidradius (R1, R2, R3) am Rand oder außerhalb der ersten Linsenfläche (2) liegen.

7. Linsenrohling (1) nach einem der Ansprüche 4 bis 6, **dadurch gekennzeichnet, dass** der größere Ellipsoidradius (R3) aus der Gruppe des ersten, zweiten und dritten Ellipsoidradius (R1, R2, R3) wenigstens so groß ist wie der Durchmesser (D) des Linsenrohlings (1).

8. Linsenrohling (1) nach einem der Ansprüche 4 bis 7, **dadurch gekennzeichnet, dass** das Größenverhältnis zwischen dem kleinsten und dem größten Ellipsoidradius aus der Gruppe des ersten, zweiten und dritten Ellipsoidradius (R1, R2, R3) einen Faktor zwischen 1,15 und 4,00, vorzugsweise zwischen 1,20 und 3,50, und besonders bevorzugt zwischen 1,25 und 3,00 aufweist.

9. Linsenrohling (1) nach einem der vorhergehenden Ansprüche, **dadurch gekennzeichnet, dass** die erste Linsenfläche (2) konvex ist.

10. Linsenrohling (1) nach einem der vorhergehenden Ansprüche, **dadurch gekennzeichnet, dass** die zweite Linsenfläche (3) konkav ist.

11. Linsenrohling (1) nach einem der vorhergehenden Ansprüche, **dadurch gekennzeichnet, dass** die zweite Linsenfläche (3) eine Oberflächengeometrie aufweist, die einem Teilausschnitt aus einer zweiten Melonenform entspricht.

12. Linsenrohling (1) nach Anspruch 11, **dadurch gekennzeichnet, dass** die Größe der zweiten Melonenform um einen Multiplikationsfaktor von der Größe der ersten Melonenform (T1) abweicht, wobei die erste Melonenform (T1) und die zweite Melonenform die gleiche Form haben.

13. Linsenrohling (1) nach einem der Ansprüche 12 oder 13, **dadurch gekennzeichnet, dass** die erste Melonenform (T1) und die zweite Melonenform die gleiche Ausrichtung im Raum und den gleichen Mittelpunkt haben.

14. **Rohlingsortiment** bestehend aus 2 bis 20, vorzugsweise 3 bis 12 und besonders bevorzugt 4 bis 9 Linsenrohlingen (1) nach einem der vorhergehenden Ansprüche mit unterschiedlich stark gekrümmten ersten Linsenflächen, wobei die unterschiedlich starken Krümmungen auf unterschiedlichen Melonenformen beruhen.

15. Verfahren zur Herstellung eines Brillenglases aus einem optischen Linsenrohling (1) nach einem der Ansprüche 1 bis 13 umfassend die folgenden Schritte:
• formgebende Bearbeitung der ersten und/oder zweiten Linsenfläche (2, 3);
• Heraustrennen eines Ausschnitts aus dem formgebend bearbeiteten Linsenrohling (1), der einen Teilausschnitt der ersten und zweiten Linsenfläche (2, 3) aufweist, entlang einer Fassungslinie (5).

16. Verfahren nach Anspruch 15, **dadurch gekennzeichnet, dass** der Teilausschnitt eine vertikale Sichtachse (V) und eine horizontale Sichtachse (H) aufweist, die sich in einer Nullblickachse (N) schneiden, wobei die erste und/oder zweite Linsenfläche (2, 3) entlang der vertikalen Sichtachse (V) eine geringere Krümmung aufweist als entlang der horizontalen Sichtachse (H).

17. Verfahren nach einem der Ansprüche 15 oder 16, **dadurch gekennzeichnet, dass** der Teilausschnitt eine vertikale Sichtachse (V) aufweist, die eine Nullblickachse (N) schneidet, wobei die Krümmung der ersten und/oder zweiten Linsenfläche (2, 3) entlang der vertikalen Sichtachse (V) von einer Glasoberkante (6) in Richtung einer Glasunterkante (7) zunimmt.
